(19) Europäisches Patentamt
European Patent Office
Office européen des brevets

(11) EP 1 073 690 B1

(12) EUROPÄISCHE PATENTSCHRIFT

(45) Veröffentlichungstag und Bekanntmachung des Hinweises auf die Patenterteilung:
**14.01.2004 Patentblatt 2004/03**

(21) Anmeldenummer: **99920762.4**

(22) Anmeldetag: **16.04.1999**

(51) Int Cl.[7]: **C08J 5/22**, C08L 71/00, C08L 81/06, H01M 8/10, H01M 8/02, B01D 71/80, B01D 71/68

(86) Internationale Anmeldenummer:
**PCT/EP1999/002756**

(87) Internationale Veröffentlichungsnummer:
**WO 1999/054389 (28.10.1999 Gazette 1999/43)**

(54) **SÄURE-BASE-POLYMERBLENDS UND IHRE VERWENDUNG IN MEMBRANPROZESSEN**

ACID-BASE POLYMER BLENDS AND THEIR USE IN MEMBRANE PROCESSES

MELANGES CONSTITUES D'ACIDES, DE BASES ET DE POLYMERES, ET LEUR UTILISATION DANS DES PROCEDES A MEMBRANE

(84) Benannte Vertragsstaaten:
**AT BE CH CY DE DK ES FI FR GB GR IE IT LI LU MC NL PT SE**

(30) Priorität: **18.04.1998 DE 19817376**

(43) Veröffentlichungstag der Anmeldung:
**07.02.2001 Patentblatt 2001/06**

(73) Patentinhaber: **Universität Stuttgart
70199 Stuttgart (DE)**

(72) Erfinder:
- **KERRES, Jochen
D-70619 Stuttgart (DE)**
- **CUI, Wei
D-70569 Stuttgart (DE)**

(74) Vertreter: **Luderschmidt, Schüler & Partner GbR
Patentanwälte,
Postfach 3929
65029 Wiesbaden (DE)**

(56) Entgegenhaltungen:
**EP-A- 0 337 626**
**EP-A- 0 574 791**
**EP-A- 0 576 830**
**DE-A- 19 632 285**

- **DATABASE WPI Section Ch, Week 9216 Derwent Publications Ltd., London, GB; Class A26, AN 92-128282 XP002113729 & JP 04 071626 A (NITTO DENKO CORP), 6. März 1992 (1992-03-06)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung sind Polymerblends und Polymerblendmembranen, die aus einer polymeren Sulfonsäure und einem primäre, sekundäre oder tertiäre Aminogruppen enthaltenden Polymer bestehen, die durch Vermischen des polymeren Sulfonsäuresalzes mit dem primäre, sekundäre oder tertiäre Aminogruppen enthaltenden Polymer hergestellt werden. Desweiteren ist Gegenstand dieser Erfindung der Einsatz von Polymerblendmembranen in Membranbrennstoffzellen, Polymerelektrolyt-membranbrennstoffzellen (PEFC) oder Direktmethanolbrennstoffzellen (DMFC), in der Membranelektrolyse, in der wässrigen oder wasserfreien Elektrodialyse, in der Diffusionsdialyse, in der perstraktiven Abtrennung von Alkenen aus Alken/Alkanmischungen (die Membranen sind hier in der $SO_3Ag$-Form, wobei das $Ag^+$ das Alken reversibel komplexiert (-> erleichterter Transport)), in der pervaporativen Abtrennung von Wasser aus Wasser/Organika-Mischungen oder in der Gastrennung.

Eine Schlüssel-Kostenkomponente der PEM-Brennstoffzelle ist die protonenleitende Membran. Das bislang kommerziell verfügbare perfluorierte Ionomer Nafion® (Grot, W. G.: Perfluorinated Ion-Exchange Polymers and Their Use in Research and Industry, Macromolecular Symposia, 82, 161-172 (1994)) erfüllt die Anforderungen an die chemische Stabilität, die man an Membranen im Einsatz in PEM-Brennstoffzellen stellen muß (Ledjeff, K.; Heinzel, A.; Mahlendorf, F.; Peinecke, V.: Die reversible Membran-Brennstoffzelle, Dechema-Monographien Band 128, VCH Verlagsgesellschaft, 103-118 (1993)). Jedoch weist es diverse Nachteile auf, die die Suche nach Alternativmaterialien notwendig machen: Es ist sehr teuer (DM 1400.-/$m^2$). Das sehr komplexe Herstellverfahren beinhaltet hochtoxische Zwischenstufen (siehe Grot, W.G.). Die Umweltverträglichkeit von Nafion® ist kritisch zu bewerten: als perfluoriertes Polymer ist es schwer abbaubar. Die Recyclierbarkeit von Nafion® ist fraglich.

Bei Versuchen der Anwendung von Nafion® in Direktmethanol-Brennstoffzellen (DMFC) wurde festgestellt, daß es besonders bei Verwendung von reinem Methanol eine sehr hohe Methanol-Permeabilität aufweist (Surampudi, S., Narayanan, S. R.; Vamos, E.; Frank, H.; Halpert, G.; LaConti, A.; Kosek, J.;Surya Prakash, G. K.; Olah, G. A.: Advances in direct oxidation methanol fuel cells J. Power Sources, 47, 377-385 (1994)) was die Energieeffizienz der DMFC durch Mischpotentialbildung stark verschlechtert.

Teilfluorierte lonomere befinden sich zur Zeit im Forschungsstadium. An dieser Stelle sind Arbeiten von G. G. Scherer (Scherer, G. G.: Polymer Membranes for Fuel Cells Ber. Bunsenges. Phys. Chem. 94, 1008-1014 (1990)); (Scherer, G. G.; Büchi, F. N.; Gupta, B.; Rouilly, M.; Hauser, P. C; Chapiro, A.: Radiation Grafted and Sulfonated (FEP-g-Polystyrene) - An Alternative to Perfluorinated Membranes for PEM Fuel Cells? Proceedings of the 27th Intersociety Energy Conversion Engineering Conference IECEC-92, San Diego, USA, Aug. 3-7, 3.419 - 3.424 (1992)); (Gupta, B.; Büchi, F. N; Scherer, G. G: Materials Research Aspects of Organic Solid Proton Conductors Solid State lonics 61, 213-218 (1993)) zu nennen, der in perfluorierten Polymerfolien mit $\gamma$-Strahlung Radikale erzeugt und auf die gebildeten Radikale Styrol aufgepfropft hat. Die Polystyrolketten der gebildeten Perfluorpolymer-Polystyrol-IPN's (Interpenetrating Polymer Networks) wurden dann sulfoniert. Diese Polymermembranen zeigten bei der Anwendung in PEM-Brennstoffzellen eine gute Performance. Das angewandte Herstellungsverfahren erscheint jedoch nicht geeignet zur Massenproduktion dieses Membrantyps. Die kanadische Firma Ballard hat eine teilfluorierte Protonenleitermembran aus sulfoniertem Poly($\alpha$,$\beta$,$\beta$-trifluorstyrol) (Wei, J.; Stone, C.; Steck, A. E.: Trifluorostyrene and substituted trifluorostyrene copolymeric compositions and ion-exchange membranes formed therefrom WO 95/08581, Ballard Power Systems,) entwickelt. Nachteil dieser Membran ist ihr hoher Preis aufgrund des komplizierten Herstellungsverfahrens für das Monomer $\alpha$,$\beta$,$\beta$-Trifluorstyrol (Livingston, D. I.; Kamath, P. M.; Corley, R. S.: Poly-$\alpha$,$\beta$,$\beta$-trifluorostyrene Journal of Polymer Science, 20, 485-490 (1956)) und aufgrund der schlechten Sulfonierbarkeit von Poly($\alpha$,$\beta$,$\beta$-trifluorstyrol).

In der Literatur finden sich einige Arbeiten zum Einsatz von Aryl-Hauptkettenpolymeren in PEM-Brennstoffzellen. Die wichtigsten Arbeiten sollen hier genannt werden:

Polybenzimidazol-Phosphorsäure

Membranen des Engineering-Thermoplasts Polybenzimidazol werden mit Phosphorsäure getränkt (Wainright, J. S.; Wang, J.-T.; Savinell, R. F.; Litt, M.; Moaddel, H.; Rogers, C.: Acid Doped Polybenzimidazoles, A New Polymer ElectrolyteThe Electochemical Society, Spring Meeting, San Francisco, May 22-27, Extended Abstracts, Vol. 94-1, 982-983 (1994)), wobei die Phosphorsäure als Protonenleiter fungiert. Die Phosphorsäuremoleküle werden durch Wasserstoffbrückenbindungen zum Polymer und durch Protonierung der Imidazol-Gruppierungen unter Bildung des Salzes $H_2PO_4^{-}{}^{+}$HNPolymer in der Membran gehalten. Bei diesen Membranen besteht jedoch die Gefahr, daß die Phosphorsäure allmählich mit dem in der Brennstoffzelle während des Betriebs gebildeten Wasser aus der Polybenzimidazol-Matrix ausgetragen wird, da das Verhältnis von Phosphorsäuremolekülen zu Imidazolgruppierungen in diesen Polymerblends etwa 3:1 beträgt.

Sulfoniertes Polyethersulfon

In einer Arbeit von Ledjeff (Nolte, R.; Ledjeff, K.; Bauer, M.; Mülhaupt, R.: Partially Sulfonated poly(arylene ether sulfone) - A Versatile Proton Conducting Membrane Material for Modern Energy Conversion Technologies Journal of Membrane Science 83, 211-220 (1993)) wird der Einsatz von vernetzten sulfonierten Polyethersulfon-Ionomeren, hergestellt durch elektrophile Sulfonierung von Polyethersulfon, als Protonenleiter in PEM-Brennstoffzellen vorgeschlagen. Jedoch wird in dieser Arbeit keine U/I-Kennlinie der vorgestellten Membran präsentiert, was die Abschätzung der Eignung dieses Ionomers für PEM-Brennstoffzellen schwierig macht.

Sulfoniertes PEEK

In der Patentliteratur findet sich eine Arbeit zum Einsatz von Membranen aus sulfonierten Polyetherketonen (PEEK) in PEM-Brennstoffzellen (Helmer-Metzmann, F.; Ledjeff, K.; Nolte, R., et al.: Polymerelektrolyt-Membran und Verfahren zu ihrer Herstellung EP 0 574 791 A2. Diese Polymere sollen eine gute Performance und chemische Stabilität in PEM-Brennstoffzellen aufweisen. Jedoch zeigen diese Membranen - insbesondere bei für die PEM-Brennstoffzelle notwendigen hohen Protonenleitfähigkeiten und damit Ionenaustauscherkapazitäten - hohe Quellungswerte, was die mechanischen Eigenschaften verschlechtert und damit die Lebensdauer in PEM-Brennstoffzellen verkürzt. Außerdem besteht insbesondere dann, wenn PEEK heterogen sulfoniert wird, die Gefahr, daß das Polymer partiell rekristallisiert (unmodifiziertes PEEK ist teilkristallin) und dadurch versprödet.

Sulfonierte Polyphenylene

Membranen, hergestellt aus in organischen Lösungsmitteln löslichen sulfonierten chemisch und thermisch stabilen Polyphenylenen als Alternativmaterialien für Nafion® zum Einsatz in PEFC werden vorgeschlagen von Matejcek, L.; Nolte, R.; Heinzel, A.; Ledjeff, K.; Zerfass, T.; Mülhaupt, R.; Frey, H.: Die Membranbrennstoffzelle: Untersuchungen an Membran/Elektrodeneinheiten Jahrestagung 1995 der Fachgruppe Angewandte Elektrochemie der GDCh, Duisburg, 27. - 29. Sept. 1995, Abstract Poster Nr. 20 (1995). Jedoch sind bisher mit diesen Membranen noch keine Untersuchungen in PEFC's bekannt geworden.

Sulfoniertes Polyphenylensulfid

In (Miyatake, K.; Iyotani, H.; Yamamoto, K.; Tsuchida, E.: Synthesis of Poly(phenylene sulfide sulfonic acid) via Poly(sulfonium cation) as a Thermostable Proton-Conducting Polymer Macromolecules 1996, 29, 6969-6971 (1996)) ist die Herstellung eines chemisch und thermisch stabilen sulfonierten Polyphenylensulfids via Polysulfoniumkation-Zwischenstufe beschrieben. Der Nachteil des Herstellungsverfahrens ist, daß es relativ kompliziert und damit teuer ist.

Säure-Base-Polymer-Blends auf Basis von Vinylpolymeren sind in der einschlägigen Literatur häufig beschrieben (Bazuin, C. G.: Ionomers (Compatibilization of Blends), in: Polymeric Materials Encyclopedia (Ed.-in-Chief J. C. Salomone), Vol. 5 (H-L), CRC Press (Boca Raton, New York, London, Tokyo) 3454-3460 (1996)), z. B. solche Säure-Base-Blends, die aus Poly(meth)-acrylaten als Säurekomponente und Polyvinylpyridiniumsalzen als basischer Komponente zusammengesetzt sind (Zhang, X.; Eisenberg, A.: NMR and Dynamic Mechanical Studies of Miscibility Enhancement via Ionic Interactions in Polystyrene/poly(ethyl Acrylate) Blends J. Polym. Sci.: Part B: Polymer Physics, 28, 1841-1857 (1990)). Diese Säure-Base-Blends wurden z. B. hinsichtlich Verträglichkeit der sauren mit der basischen Blendkomponente untersucht. Praktische Anwendungen dieser Säure-Base-Polymerblends sind bisher nicht bekanntgeworden.

Wie oben ausgeführt, ist die Bereitstellung chemisch stabiler Ionomermembranen für Elektromembranprozesse, insbesondere für Membranbrennstoffzellen, ein wichtiges Forschungsgebiet. Die Ionomermembranen sollten dabei aus der Gruppe der Arylhauptkettenpolymermembranen ausgewählt sein, da diese Polymere, nächst den perfluorierten Polymeren die höchste chemische Stabilität aufweisen. Säure-Base-Blends, auf der Basis von PEEK sind Kerres, J.; Cui, W.; Wagner, N.; Schnurnberger, W.; Eigenberger, G.: A.7 Entwicklung von Membranen für die Elektrolyse und für Membranbrennstoffzellen Vortrag, "Jahreskolloquium 1997 des Sonderforschungsbereichs 270 - Energieträger Wasserstoff", 29. 9. 1997, Berichtsband S. 169-193 (1997); ISBN: 3-00-001796-8 Cui, W.; Kerres, J.; Eigenberger, G.: Development and Characterization of Ion-Exchange Polymer Blend Membranes Poster, Euromembrane '97 "Progress in Membrane Science and Technology", University of Twente, 23. bis 27. 6. 1997, Abstracts S. 181 (1997). Die Polymerblends werden dabei durch Mischung von Poly(etheretherketonsulfonsäure) (PEEK $SO_3H$) und Poly(ethersulfon-orthosulfon-diamin) (PSU-$NH_2$) in einem dipolar-aprotischen Lösungsmittel mit nachfolgender Abdampfung des Lösungsmittels hergestellt. In den Veröffentlichungen ist die Charakterisierung dieser speziellen Polymerblends hinsichtlich Ionenleitfähigkeit, Quellung, Permselektivität und thermischer Beständigkeit sowie die Anwendung einer dieser Membranen allein in der Elektrodialyse beschrieben. Mit dem beschriebenen Verfahren(Mischen der polymeren Sulfonsäure mit dem polymeren Amin) können nur solche Säure-Base-Blends hergestellt werden, die eine sehr schwach basische Aminokomponente aufweisen, wie es bei Poly(ethersulfon-ortho-sulfon-diamin) der Fall ist. Stärkere polymere Basen bilden nach Mischen mit der polymeren Sulfonsäure sofort einen unlöslichen Polyelektrolytkomplex.

Alle sulfonierten Arylpolymere zeigen grundsätzlich eine große Sprödigkeit bei Austrocknung, welche beispielsweise bei ihrem Einsatz in Brennstoffzellen bei Lastwechselvorgängen auftreten kann. Die Verringerung der Sprödigkeit der sulfonierten Arylpolymer-Ionomere ist somit ein vorrangiges Problem bei ihrer Weiterentwicklung für den Dauerbetrieb in PEM-Brennstoffzellen.

Die vorgenannte Aufgabe wird in einer ersten Ausführungsform durch ein Verfahren zur Herstellung von Ionenaustauschermembranen, das dadurch gekennzeichnet ist, daß man Lösungen von polymeren Sulfonsäuresalzen mit einer Arylhaupskette der allgemeinen Formel

$$\text{Polymer-}SO_3X,$$

wobei X = 1-wertige Metallkationen, $NH_4^+$, $NH_3R^+$, $NH_2R_2^+$, $NHR_3^+$, $NR_4^+$, PyridinH$^+$, R = beliebiger Alkyl- und/oder Arylrest mit primären, sekundären oder tertiären Stickstoff enthaltenden Polymeren in dipolar-aprotischen Lösungsmittel umsetzt und die erhaltenen polymeren Sulfonsäuresalz-Base-Blends nach Lagerung bei 20 °C bis 100 °C in heißer verdünnter Mineralsäure nachbehandelt werden.

Bei den erfindungsgemäßen Polymerblendmembranen besteht mindestens die polymere Sulfonsäure beziehungsweise das Sulfonsäuresalz aus einem Arylhauptkettenpolymer (wie z. B. Polyethersulfon, Polyetherketon, Polyphenylen-oxid...), wodurch eine hohe mechanische, chemische und thermische Stabilität der Polymerblends erhalten wird, was die erfindungsgemäßen Membranen zu einer preisgünstigen Alternative zu den bislang in PEFC und DMFC hauptsächlich verwendeten sehr teuren perfluorierten Ionomermembranen vom Nafion®-Typ macht.

Es wurde festgestellt, daß bei der Mischung einer polymeren Sulfonsäure, beispielsweise Poly(ethersulfonsulfonsäure) beziehungsweise einer Poly(etherketonsulfonsäuresalzes) der allgemeinen Formel I

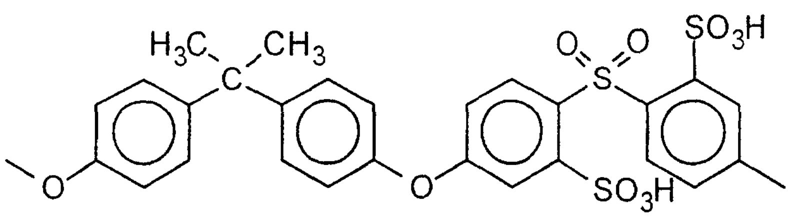

(I)

Poly(ethersulfonsulfonsäure) PSU Udel® mit 2 Sulfonsäuregruppen pro Wiederholungseinheit; erhältlich nach Kerres, J.; Cui, W.; Reichle, S.: New sulfonated engineering polymers via the metalation route. I. Sulfonated poly (ethersulfone) (PSU Udel®) via metalation-sulfination-oxidation, Journal of Polymer Science, Part A: Polymer Chemistry 34, 2421-2438 (1996)) oder

Poly(etheretherketonsulfonsäure) der allgemeinen Formel II

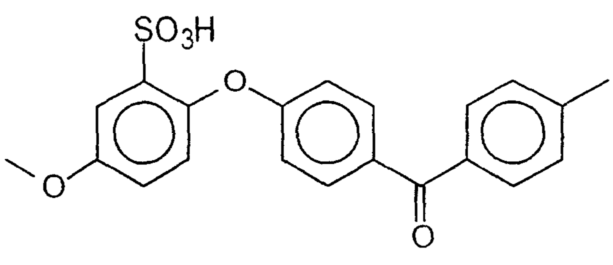

(II)

Poly(etherketonsulfonsäure) mit 1 Sulfonsäuregruppe pro Wiederholungseinheit; hergestellt nach Helmer-Metzmann et al. mit Poly(ethersulfon-ortho-sulfon-diamin) der allgemeinen Formel III

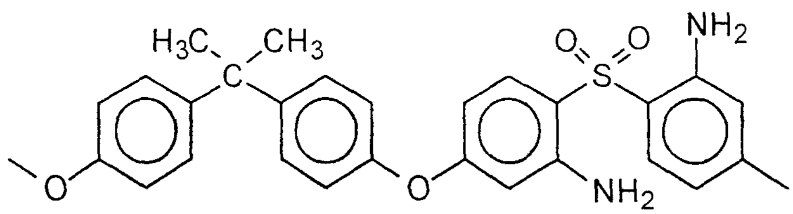

(III)

Poly(ethersulfon-ortho-sulfon-diamin) mit 2 primären Aminogruppen pro Wiederholungseinheit; hergestellt nach Guiver, M. D.; Robertson, G. P.; Foley, S.: Chemical Modification of Polysulfones II: An Efficient Method for Introducing Primary Amine groups onto the aromatic chain Macromolecules 28, 7612-7621 (1995) ein Polymerblend entsteht, der sich überraschenderweise durch folgende Eigenschaften auszeichnet.

(1) starke Verringerung der Sprödigkeit gegenüber der jeweiligen reinen polymeren Sulfonsäure;

(2) wasserlösliche polymere Sulfonsäuren verlieren überraschenderweise nach dem Zusammenmischen mit der polymeren basischen Stickstoffverbindung ihre Wasserlöslichkeit aufgrund der Wechselwirkungen der Polymerketten der Blendkomponenten;

(3) die Säure-Base-Blends, die mit wasserlöslichen polymeren Sulfonatsalzen oder Sulfonsäuren hergestellt wurden, weisen überraschend hohe Ionenaustauscherkapazitäten von bis zu 2,7 meq $SO_3H$/g Polymer auf (sulfonierte Polymere dieser Kapazität sind normalerweise sehr gut wasserlöslich), was zu extrem niedrigen elektrischen Widerständen führt (Beispiel: 11), $R^{H^+}_{a}$ =0,05 Ωcm$^2$, $R^{H^+}_{sp}$ =5,88 Ωcm);

(4) die Säure-Base-Blends weisen überraschenderweise eine gegenüber Nafion® um den Faktor 60 bis 250 verringerte Methanol-Permeabilität auf, was ihre Anwendung in DMFC vorteilhaft machen dürfte;

(5) die Säure-Base-Blends zeigen überraschenderweise eine hervorragende Performance in $H_2$-PEFC und DMFC.

Wie vorstehend beschrieben, fällt aus Lösungen von sehr schwachen polymeren Basen wie Poly(ethersulfon-ortho-sulfon-diamin) in dipolar-aprotischen Lösungsmitteln wie N-Methylpyrrolidinon (NMP), N,N-Dimethylacetamid (DMAc), N,N-Dimethylformamid (DMF) oder Dimethylsulfoxid (DMSO) beim Zusammenmischen mit polymeren Sulfonsäuren kein Polyelektrolytkomplex aus. Setzt man jedoch eine stärkere polymere Base ein, fällt beim Zusammenmischen der Lösung dieser Base in dipolar-aprotischen Lösungsmitteln mit einer Lösung der polymeren Sulfonsäure in dipolar-aprotischen Lösungsmitteln durch Bildung des Polysalzes ein Polyelektrolytkomplex aus. Ein Beispiel für eine polymere Base, die mit polymeren Sulfonsäuren Polyelektrolytkomplexe bildet ist Poly(4-vinylpyridin). Die Polyelektrolytbildungsreaktion ist die folgende:

$$PPy + P'\text{-}SO_3H \text{----}> PPyH^{+-}O_3S\text{-}P'$$

Es wurde nun überraschend festgestellt, daß sich aus dem Zusammenmischen von Lösungen eines polymeren Sulfonsäuresalzes (Beispiel: Poly(etheretherketon-Li-sulfonat oder Poly(ethersulfon-Li-sulfonat) mit Lösungen einer polymeren Base (Beispiel: Poly(ethersulfon-ortho-sulfon-diamin, Poly(4-vinylpyridin), Poly(ethylenimin), Poly(anilin)) einphasige Lösungen erzeugen lassen, die nach dem Abdampfen des Lösungsmittels klare, transparente und mechanisch sowie thermisch stabile Polymerblendfilme bilden. Wenn diese Polymerblendfilme nach der Herstellung bei Temperaturen von 20-100°C mit verdünnten Mineralsäuren nachbehandelt werden, werden über diesen Weg auch solche Säure-Base-Blends erhalten, die direkt aus der Mischung der Lösung der polymeren Sulfonsäure mit dem polymeren Amin wegen Polyelektrolytausfällung nicht zugänglich sind. Auf diesem Wege sind beispielsweise kompatible Blends von Poly(4-vinylpyridin) mit Poly(ethersulfonsulfonsäure) zu erhalten, die direkt aus Poly(4-vinylpyridin) und Poly(ethersulfonsulfonsäure) wegen Polyelektrolytausfällung nicht darstellbar sind.

Über den vorstehend beschriebenen Umweg ist nahezu jede polymere Sulfonsäure/jedes polymere Sulfonsäuresalz mit nahezu jedem polymeren (Primären/sekundären/tertiären) Amin zu einem zumindest kompatiblen Polymerblend kombinierbar. Durch entsprechende Wahl der Reaktionspartner können die Eigenschaften des jeweiligen Säure-Base-Blends maßgeschneidert werden.

Vorzugsweise werden polymere Sulfonsäuresalze ausgewählt aus Polymeren, die als Repitiereinheiten aromatische

Kern-Stukturen der Formeln $R_1$ oder $R_2$ aufweisen, wobei

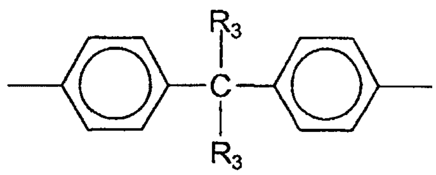

($R_1$)

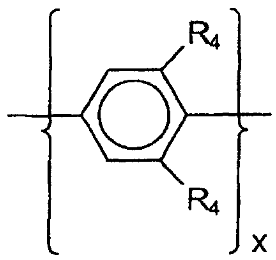

($R_2$)

wobei

$R_3$ für Wasserstoff, Trifluormethyl oder $C_nH_{2n+1}$, mit n = 1 bis 10, insbesondere Methyl

$R_4$ für Wasserstoff, $C_nH_{2n+1}$ mit n = 1 bis 10, insbesondere Methyl oder Phenyl und

x für 1, 2 oder 3 steht,

die über Brückengruppen $R_5$, $R_6$, $R_7$ oder $R_8$ verknüpft sind, wobei

$R_5$ für -O-.

$R_6$ für $-SO_2-$,

$R_7$ für >C = O und

$R_8$ für -S- stehen;

insbesondere,

Poly(etheretherketone) mit ($[R_5-R_2-R_5-R_2-R_7]_n$; x = 1, $R_4$=H)

Poly(ethersulfone) ($[R_1-R_5\ R_2-R_6-R_2-R_5]_n$; $R_2$: x=1, $R_4$=H),

Poly(ethersulfone) ($[R_2-R_6-R_2-R_5]_n$; $R_2$: x=1, $R_4$=H),

Poly(phenylsulfone) ($[(R_2)_2-R_5-R_2-R_6-R_2]_n$; $R_2$: x=2, $R_4$=H),

Polyetherethersulfone ($[R_5-R_2-R_5-R_2-R_6]_n-[R_5-R_2-R_6-R_2]_m$; $R_2$: x=1, $R_4$=H, $\frac{n}{m}$=0,18),

Poly(phenylensulfide) ($[R_2-R_8]_n$; $R_2$: x=1, $R_4$=H) und/oder

Poly(phenylenoxide) ($[R_2-R_5]_n$; $R_4=CH_3$)

mit den Stickstoff enthaltenden Polymeren umgesetzt.

Die vorteilhaften Eigenschaften der Säure-Base-Blends werden durch spezifische Wechselwirkungen zwischen den Polymerketten der Blendkomponenten hervorgerufen, wie (siehe Bazuin, C. G.) (Zhang, X.; Eisenberg, A.: NMR and Dynamic Mechanical Studies of Miscibility Enhancement via Ionic Interactions in Polystyrene/poly(ethyl Acrylate) Blends J. Polym. Sci.: Part B: Polymer Physics, 28, 1841-1857 (1990)):

- Wasserstoffbrückenbindungen
- Säure-Base-Wechselwirkungen
- Ion-Dipol-Wechselwirkungen

Diese spezifischen Wechselwirkungen führen zu einer Kompatibilität und teilweise zu einer molekularen Mischbarkeit der polymeren Sulfonsäuren/der polymeren Sulfonsäuresalze mit den polymeren basischen Stickstoffverbindungen.

Die Säure-Base-Blends von Anspruch 8 lassen sich vorteilhaft neben den bereits genannten Anwendungen Direktmethanol- und $H_2$-Membranbrennstoffzelle noch in anderen Membranverfahren einsetzen:

Membranelektrolyse
Wässrige oder wasserfreie Elektrodialyse
Diffusionsdialyse

Abtrennung von Alkenen aus Alken/Alkanmischungen (die Membranen sind hier in der $SO_3Ag$-Form, wobei das $Ag^+$ das Alken reversibel komplexiert und aus diesem Grunde selektiv durch die Membran transportiert (-> erleichterter Transport) (van Zyl, A.J.; Linkov, V.M.; Bobrova, L.P.; Timofeev, S.V: Perfluorosulfonate lonomer Membranes for Separation of Petrochemical Mixtures J. Mat. Sci. Lett., 15, 1459 (1996)) mittels Gastrennung, Pervaporation oder Perstraktion.

Des weiteren können die Säure-Base-Polymerblends von Anspruch 8 in Form dünner Folien (Membranen) oder in Form von Hohlfasern in der Pervaporation, Perstraktion, Gastrennung, Dialyse, Ultrafiltration, Nanofiltration oder Umkehrosmose. verwendet werden.

Pervaporative Abtrennung von Wasser aus Wasser/Organika-Mischungen Abtrennung von Wasserdampf aus seinen Mischungen mit Permanentgasen oder mit Organika.

<u>Ausführungsbeispiele:</u>

<u>Bezugsbeispiel:</u>

Herstellung eines Säure-Base-Blends aus sulfoniertem PEEK und aminiertem PSU (analog J. Kerres et al., loc.cit.)

Poly(etheretherketonsulfonsäure) Victrex® wurde nach Helmer-Metzmann et al. hergestellt. Das Polymer hat eine Ionenaustauscherkapazität von 1,66 meq $SO_3H$/g. Aminiertes Polysulfon Udel® wurde nach bekannten Verfahren (analog Guiver et al., loc.cit.) hergestellt. Das Polymer weist 2 Aminogruppen pro Wiederholungseinheit auf. Man mischte die Poly(etheretherketonsulfonsäure) und das aminierte Polysulfon in verschiedenen Mischungsverhältnissen zusammen (Tab. 1) und löste diese Mischung in N-Methyl-Pyrrolidinon zu einer 15 Gew%igen Lösung. Die Lösung wurde nach Herstellung filtriert und entgast. Danach wird die Polymerlösung auf einer Unterlage (z. B. Glasplatte) zu einem dünnen Film gespreitet und danach das Lösungsmittel bei 125°C im Umluftofen oder im Vakuumtrockenschrank abgedampft. Nach der Lösungsmittelabdampfung wurde die Glasplatte mit dem Polymerfilm in eine Wanne mit deionisiertem Wasser gelegt. Dabei löste sie sich innerhalb von 1/2 h von der Glasplatte. Die Membran wurde nun zuerst 48 h in 1 N HCl und dann 48 h in deionisiertem Wasser bei jeweils 60°C nachbehandelt. Danach wurden ihre Eigenschaften charakterisiert. Die Charakterisierungsergebnisse sind in Tab. 1 aufgelistet.

Tab.1:

| Zusammensetzung und Eigenschaften von Blendmembranen aus sulfoniertem PEEK und aminiertem PSU | | | | | | |
|---|---|---|---|---|---|---|
| Bezugsbeispiel | Zusammensetzung | Quellung [%] | IEC [meq/g] | Perm-selektivität [%] | $R_a$ [$\Omega cm^2$] | $R_{sp}$ [$\Omega$cm] |
| 1 | 4,25 g PEEK $(SO_3H)_{0,5}$ 0,75 g $PSU(NH_2)_2$ | <40 | 1,34 | | 0,109 | 18,2 |
| 2 | 4,5 g PEEK $(SO_3H)_{0,5}$ 0,5 g $PSU(NH_2)_2$ | <50 | 1,58 | | 0,101 | 34,8 |
| 3 | 4 g $PEEK(SO_3H)_{0,5}$ 1 g $PSU(NH_2)_2$ | 23,81 | 1,4 | 94,44 | 0,25 | 46,41 |
| 4 | 4,25 g PEEK $(SO_3H)_{0,5}$ 0,75 g $PSU(NH_2)_2$ | 29,5 | 1,63 | 97,1 | | 24,8 |
| 5 | 4 g $PEEK(SO_3H)_{0,5}$ 1 g $PSU(NH_2)_2$ | 28,4 | 1,54 | 95 | | 23,6 |

Tab.1: (fortgesetzt)

| Zusammensetzung und Eigenschaften von Blendmembranen aus sulfoniertem PEEK und aminiertem PSU | | | | | | |
|---|---|---|---|---|---|---|
| Bezugsbeispiel | Zusammensetzung | Quellung [%] | IEC [meq/g] | Perm-selektivität [%] | $R_a$ [Ωcm$^2$] | $R_{sp}$ [Ωcm] |
| 6 | 3,5 g PEEK $(SO_3H)_{0,5}$ 1,5 g $PSU(NH_2)_2$ | 21,4 | 1,42 | 98,2 | | 50,3 |
| 7 | 2,4 g PEEK $(SO_3H)_{0,5}$ 1,6 g $PSU(NH_2)_2$ | 16,7 | 1,13 | 99,5 | | 105,5 |

Beispiele 1 bis 11:

Herstellung eines Säure-Base-Blends aus sulfoniertem PSU und aminiertem PSU

Poly(ethersulfonsulfonsäure) Udel® wurde nach Kerres et al. hergestellt. Das Polymer hat entweder eine Ionenaustauscherkapazität von 2,6 meq $SO_3H$/g (wasserlöslich) oder eine Ionenaustauscherkapazität von 1,7 meq $SO_3H$/g (nicht wasserlöslich). Aminiertes Polysulfon Udel® wurde nach Guiver et al. hergestellt. Das Polymer weist 2 Aminogruppen pro Wiederholungseinheit auf. Die Poly(ethersulfonsulfonsäure) und das aminierte Polysulfon wurden in verschiedenen Mischungsverhältnissen vermischt (Tab. 1) und diese Mischung in N-Methyl-Pyrrolidinon zu einer 15 Gew%igen Lösung gelöst. Die Lösung wurde nach der Herstellung filtriert und entgast. Danach wurde die Polymerlösung auf einer Unterlage (z. B. Glasplatte) zu einem dünnen Film gespreitet und danach das Lösungsmittel bei 125°C im Umluftofen oder im Vakuumtrockenschrank abgedampft. Nach der Lösungsmittelabdampfung wurde die Glasplatte mit dem Polymerfilm in eine Wanne mit deionisiertem Wasser gelegt. Dabei löste sie sich innerhalb von 1/2 h von der Glasplatte. Die Membran wurde nun zuerst 48 h in 1 N HCl und dann 48 h in deionisiertem Wasser bei jeweils 60°C nachbehandelt. Danach wurden ihre Eigenschaften charakterisiert. Die Charakterisierungsergebnisse sind in Tab. 2 aufgelistet.

Tab. 2:

| Zusammensetzung und Eigenschaften von Blendmembranen aus sulfoniertem und aminiertem PSU | | | | | | |
|---|---|---|---|---|---|---|
| Beispiel | Zusammensetzung | Quellung [%] | IEC [meq/g] | Perm-selektivität [%] | $R_a$ [Ωcm$^2$] | $R_{sp}$ [Ωcm] |
| 1 | 3 g $PSUSO_3H$<br>1 g $PSU(NH_2)_2$ | 26,83 | 1,44 | 97,25 | 0,261 | 70,41 |
| 2* | 2,8 g $PSUSO_3Li$<br>0,7 g $PSU(NH_2)_2$ | 20,22 | 1,27 | 99,18 | 0,68 | 65,34 |
| 3 | 4,2 g $PSUSO_3H$<br>1,8 g $PSU(NH_2)_2$ | 17,04 | 1,09 | 99,74 | 0,966 | 148,61 |
| 4 | 5,4 g $PSUSO_3H$<br>0,6 g $PSU(NH_2)_2$ | 40,54 | 1,59 | 92,14 | 0,139 | 13,93 |
| 5 | 4,8 g $PSUSO_3H$<br>1,2 g $PSU(NH_2)_2$ | 30,6 | 1,54 | 97,05 | 0,28 | 29,09 |
| 6 | 3 g $PSUSO_3H$<br>3 g $PSU(NH_2)_2$ | 11,70 | 0,42 | 99,58 | - | - |
| 7 | 3,6 g $PSUSO_3H$<br>2,4 g $PSU(NH_2)_2$ | 13,86 | 0,97 | 99,24 | 3,21 | 401,1 |
| 8 | 4,2 g $PSU(SO_3H)_{1,6}$<br>1,8 g $PSU(NH_2)_2$ | 42,07 | 2,1 | | 0,094 | 14,46 |

* Membran wurde durch Zusammenmischung von PSU-Lithiumsulfonat und aminiertem PSU hergestellt.

Tab. 2: (fortgesetzt)

| Zusammensetzung und Eigenschaften von Blendmembranen aus sulfoniertem und aminiertem PSU | | | | | | |
|---|---|---|---|---|---|---|
| Beispiel | Zusammensetzung | Quellung [%] | IEC [meq/g] | Perm-selektivität [%] | $R_a$ [$\Omega cm^2$] | $R_{sp}$ [$\Omega cm$] |
| 9 | 4,8 g PSU$(S0_3H)_{1,6}$ 1,2 g PSU$(NH_2)_2$ | 63,27 | 2,31 | - | 0,057 | 7,92 |
| 10 | 5,28 g PSU $(SO_3H)_{1,6}$ 0,72 g PSU$(NH_2)_2$ | 120,77 | 2,57 | - | 0,0475 | 5,52 |
| 11 | 5,58 g PSU $(SO_3H)_{1,6}$ 0,42 g PSU$(NH_2)_2$ | 306,25 | 2,66 | - | 0,05 | 5,88 |

Beispiel 12:

Herstellung eines Säure-Base-Blends aus sulfoniertem PSU und aus Poly(4-vinylpyridin)

5,7 g sulfoniertes PSU in der $SO_3Li$-Form (IEC=1,6 meq/g) wurden in 24 g N-Methylpyrrolidinon (NMP) gelöst. Danach wurden in die Lösung 0,3 g Poly(4-vinylpyridin) (Molekularmasse 200.000 g/mol) eingewogen und dieses Polymer ebenfalls aufgelöst. Die Lösung wurde nach Herstellung filtriert und entgast. Danach wurde die Polymerlösung auf einer Unterlage (z. B. Glasplatte) zu einem dünnen Film gespreitet und danach das Lösungsmittel bei 125°C im Umluftofen oder im Vakuumtrockenschrank abgedampft. Nach der Lösungsmittelabdampfung wurde die Glasplatte mit dem Polymerfilm in eine Wanne mit deionisiertem Wasser gelegt. Dabei löste sie sich innerhalb von 1/2 h von der Glasplatte. Die Membran wird nun zuerst 48 h in 1 N HCl und dann 48 h in deionisiertem Wasser bei jeweils 70°C nachbehandelt. Danach wurden ihre Eigenschaften charakterisiert. Charakterisierungsergebnisse:

| | |
|---|---|
| Ionenaustauscherkapazität: | IEC=1,2 meq $SO_3H$/g Polymer |
| Dicke: | d=65 µm |
| Quellung ($H_2O$, RT, $H^+$-Form): | SW=32,2% |
| Flächenwiderstand (RT, $H^+$-Form): | 0,144 $\Omega cm^2$ (gemessen in 0,5 N HCl) |
| spezif. Widerstand (RT, $H^+$-Form): | 22,1 $\Omega cm$ |

Beispiel 13:

Herstellung eines Säure-Base-Blends aus sulfoniertem PSU und aus Poly(ethylenimin)

3g wasserlösliches sulfoniertes Polysulfon Udel® in der $SO_3Li$-Form (Ionenaustauscherkapazität 2,5 meq $SO_3H$/g Polymer) wurden in 17 g N,N-Dimethylacetamid (DMAc) gelöst. Danach wurden in die Lösung 0,322 g 50 Gew%ige wässrige Polyethylenimin-Lösung (ALDRICH; Prod. Nr. 18,197-8) eingetropft. Die Lösung wurde nach Herstellung filtriert und entgast. Danach wurde die Polymerlösung auf einer Unterlage (z. B. Glasplatte) zu einem dünnen Film gespreitet und danach das Lösungsmittel bei 125°C im Umluftofen oder im Vakuumtrockenschrank abgedampft. Nach der Lösungsmittelabdampfung wurde die Glasplatte mit dem Polymerfilm in eine Wanne mit deionisiertem Wasser gelegt. Dabei löste sie sich innerhalb von 1/2 h von der Glasplatte. Die Membran wurde nun zuerst 48 h in 1N HCl und dann 48 h in deionisiertem Wasser bei jeweils 70°C nachbehandelt. Danach wurden ihre Eigenschaften charakterisiert. Charakterisierungsergebnisse:

| | |
|---|---|
| Ionenaustauscherkapazität: | IEC=1,65 meq $SO_3H$/g Polymer |
| Dicke: | d=110 µm |
| Quellung ($H_2O$, RT, $H^+$-Form): | SW=160% |
| Flächenwiderstand (RT, $H^+$-Form): | 0,0623 $\Omega cm^2$ (gemessen in 0,5 N HCl) |
| spezif. Widerstand (RT, $H^+$-Form): | 5,67 $\Omega cm$ |

Bezugsbeispiel 8:

Anwendung einer Säure-Base-Blendmembran in einer $H_2$-PEFC

Zwei der Membranen (Bezugsbeispiel 2, obere Kurve, und Bezugsbeispiel 1, untere Kurve in der Fig. 1) wurden in einer $H_2$-PEFC im Sauerstoff- und im Luftbetrieb getestet. Die Membranen wurden mit SIEMENS-Elektroden mit einem Pt-Gehalt von 4mg Pt/g beschichtet.

Die Versuchsbedingungen im $O_2/H_2$-Betrieb waren:

| | |
|---|---|
| Druck: | 2 bar absolut |
| Lambda: | 2 |
| Temperatur: | 80°C |

Die im $O_2/H_2$-Betrieb erhaltene Kennlinie ist in Fig. 1 gezeigt:

Die Versuchsbedingungen im Luft/$H_2$-Betrieb waren:

| | |
|---|---|
| Druck: | 1,5 bar absolut |
| Lambda: | 10 |
| Temperatur: | 65°C |

Die im Luft/$H_2$-Betrieb erhaltene Kennlinie ist in Fig. 2 gezeigt.

Aus Fig. 1 und Fig.2 ist ersichtlich, daß die Performance der untersuchten Membranen in der $H_2$-Brennstoffzelle sowohl im $O_2$- als auch im Luftbetrieb hervorragend ist.

Beispiel 14:

Anwendung einer Säure-Base-Blendmembran in einer DMFC

Eine der Membranen (Bezugsbeispiel 1) wurde in einer Direktmethanol-Brennstoffzelle (DMFC) im Luftbetrieb getestet. Die Membranen wurden mit SIEMENS-Elektroden beschichtet. Die Konzentration der Methanol/Wasser-Mischung an Methanol betrug 0,5 mol/l.

Die Versuchsbedingungen im Luft/Methanol-Betrieb waren:

| | |
|---|---|
| Druck: | 1,5/1,5 bar absolut |
| Fluß: | 100 ml/min Luft |
| Temperatur: | 80°C |

Die im Luft/Methanol-Betrieb erhaltene Kennlinie ist in Fig. 3 gezeigt.

Aus Fig. 3 ist ersichtlich, daß die Performance der Membran überraschenderweise fast so gut ist wie die von Nafion® 117. Durch weitere Dickenreduktion der Membran und/oder Reduktion der Methanol-Permeabilität via Einmischen größerer Anteile an aminiertem PSU ist sogar eine bessere Performance der Membranen gegenüber Nafion® gegeben.

## Patentansprüche

1. Verfahren zur Herstellung von Ionenaustauschermembranen, **dadurch gekennzeichnet, daß** man Lösungen von polymeren Sulfonsäuren oder Sulfonsäuresalzen mit einer Arylhauptkette mit primären, sekundären oder tertiären Stickstoff enthaltenden Polymeren , in der die Sulfonsäuresalze die allgemeine Formel

$$\text{Polymer - }SO_3X$$

haben, wobei X für 1-wertige Metallkationen, $NH_4^+$, $NHR_3^+$ $RNH_3^+$, $NH_2R_2^+$, $NR_4^+$, Pyridin$H^+$ und R für einen Alkyl und/oder Arylrest steht, in dipolar-aprotischen Lösungsmittel umsetzt und die erhaltenen polymeren Sulfonsäuresalz-Base-Blends nach Lagerung bei 20 °C bis 100 °C in heißer verdünnter Mineralsäure nachbehandelt werden.

2. Verfahren nach Anspruch 1, **dadurch gekennzeichnet, daß** man die Polymere, die ausgewählt sind aus Polyetheretherketonen, Polyethersulfonen, Polyphenylsulfonen, Polyphenylensulfiden und/oder Polyphenylenoxiden mit primären, sekundären oder tertiären Stickstoff enthaltenden Polymeren umsetzt.

**3.** Verfahren nach Anspruch 1, **dadurch gekennzeichnet, daß** man polymere Sulfonsäuresalze, ausgewählt aus Polymeren die als Repitiereinheit aromatische Kern-Stukturen der Formeln $R_1$ oder $R_2$ aufweisen, wobei

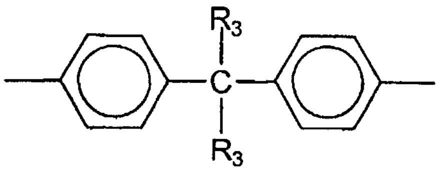

$(R_1)$

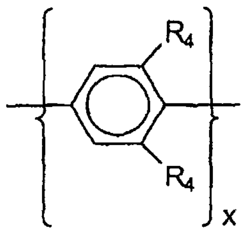

$(R_2)$

wobei

$R_3$ für Wasserstoff, Trifluormethyl oder $C_nH_{2n+1}$, mit n = 1 bis 10, insbesondere Methyl
$R_4$ für Wasserstoff, $C_nH_{2n+1}$ mit n = 1 bis 10, insbesondere Methyl oder Phenyl und
x für 1, 2 oder 3 steht,

die über Brückengruppen $R_5$, $R_6$, $R_7$ oder $R_8$ verknüpft sind, wobei

$R_5$ für -O-.
$R_6$ für $-SO_2-$,
$R_7$ für >C = O und
$R_8$ für -S- stehen;

insbesondere,
Poly(etheretherketone) mit ($[R_5-R_2-R_5-R_2-R_7]_n$; x = 1, $R_4$=H)
Poly(ethersulfone) ($[R_1-R_5-R_2-R_6-R_2-R_5]_n$; $R_2$: x=1, $R_4$=H),
Poly(ethersulfone) ($[R_2-R_6-R_2-R_5]_n$; $R_2$: x=1, $R_4$=H),
Poly(phenylsulfone) ($[(R_2)_2-R_5-R_2-R_6-R_2]_n$; $R_2$: x=2, $R_4$=H),
Polyetherethersulfone ($[R_5-R_2-R_5-R_2-R_6]_n-[R_5-R_2-R_6-R_2]_m$; $R_2$: x=1, $R_4$=H, $\frac{n}{m}$=0,18),
Poly(phenylensulfide) ($[R_2-R_8]_n$; $R_2$: x=1, $R_4$=H) und/oder
Poly(phenylenoxide) ($[R_2-R_5]_n$; $R_4=CH_3$)
mit den Stickstoff enthaltenden Polymeren umsetzt.

**4.** Verfahren nach Anspruch 1, **dadurch gekennzeichnet, daß** man polymere Sulfonsäuren in dipolar-aprotischen Lösungsmitteln auflöst, danach gegebenenfalls die dem Gehalt des Polymers an $SO_3H$-Gruppen entsprechende äquimolare Menge eines niedermolekularen primären, sekundären oder tertiären Amins zusetzt und anschließend in der Polymerlösung noch ein Polymer auflöst, das primäre, sekundäre oder tertiäre basische Stickstoffgruppen enthält.

**5.** Verfahren nach einem der Ansprüche 1 bis 4, **dadurch gekennzeichnet, daß** die Lösungsmittel ausgewählt sind aus N-Methylpyrrolidon, N,N-Dimethylacetamid, N,N-Dimethylformamid, Sulfolan oder Dimethylsulfoxid.

**6.** Verfahren nach den Ansprüchen 1 bis 5, **dadurch gekennzeichnet, daß** die Polymere ausgewählt sind aus Poly (etheretherketonen) und Poly(ethersulfonen) als Träger der Sulfonsäure- oder Sulfonsäuresalzgruppen.

**7.** Verfahren nach einem der Ansprüche 1 bis 6, **dadurch gekennzeichnet, daß** die Polymere ausgewählt sind aus Poly(etheretherketonen) und Poly(ethersulfonen) als Träger der primären, sekundären oder tertiären basischen Stickstoffgruppen.

**8.** Blendpolymere und Blendpolymermembranen, erhältlich nach einem Verfahren gemäß den Ansprüchen 1 bis 6, **dadurch gekennzeichnet, daß** man Lösungen von polymeren Sulfonsäuren oder Sulfonsäuresalzen mit einer Arylhauptkette mit Poly(4-vinylpyridin) umsetzt.

**9.** Verwendung von Säure-Base-Polymerblends nach Anspruch 8 in Form dünner Folien (Membranen) als protonenleitender Elektrolyt in Membranbrennstoffzellen (H2-Polymerelektrolytbrennstoffzellen oder Direktmethanolbrennstoffzellen), in der Polymerelektrolytmembran(PEM)-Elektrolyse, in der wässrigen oder nichtwässrigen Elektrodialyse oder in der Diffusionsdialyse.

**10.** Verwendung von Säure-Base-Polymerblends nach Anspruch 8 in Form dünner Folien (Membranen) oder in Form von Hohlfasern in der Pervaporation, Perstraktion, Gastrennung, Dialyse, Ultrafiltration, Nanofiltration oder Umkehrosmose.

## Claims

**1.** A procedure for the preparation of ion-exchange membranes, **characterised in that** solutions of polymeric sulphonic acids or sulphonic acid salts with an aryl main chain are reacted in dipolar-aprotic solvents with primary, secondary or tertiary nitrogen-containing polymers, in which aryl main chain the sulphonic acid salts have the general formula

$$\text{polymer - }SO_3X,$$

whereby X stands for 1-valent metal cations, $NH_4^+$, $NHR_3^+$, $RNH_3^+$, $NH_2R_2^+$, $NR_4^+$, pyridine $H^+$ and R stands for an alkyl and/or aryl radical, and the polymeric sulphonic acid salt-base blends obtained are aftertreated after storage at 20°C to 100°C in hot diluted mineral acid.

**2.** Procedure according to claim 1, **characterised in that** the polymers, which are selected from polyetheretherketones, polyether sulphones, polyphenyl sulphones, polyphenylene sulphides and/or polyphenylene oxides are reacted with primary, secondary or tertiary nitrogen-containing polymers.

**3.** Procedure according to claim 1, **characterised in that** polymeric sulphonic acid salts, selected from polymers which as repeating units have aromatic nucleus structures of the formulas $R_1$ or $R_2$, whereby

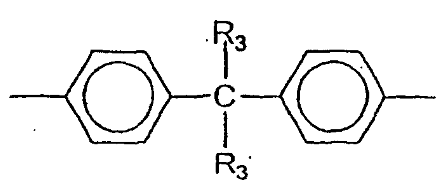

$(R_1)$

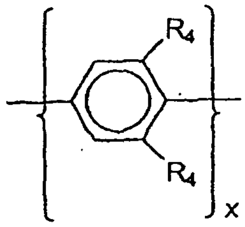

$(R_2)$

whereby
$R_3$ stands for hydrogen, trifluoromethyl or $C_nH_{2n+1}$, with n = 1 to 10, in particular methyl,
$R_4$ stands for hydrogen, $C_nH_{2n+1}$ with n = 1 to 10, in particular methyl or phenyl and
x stands for 1, 2 or 3,
which are linked via bridging groups $R_5$, $R_6$, $R_7$ or $R_8$, whereby
$R_5$ stands for -O-,
$R_6$ stands for $-SO_2-$,
$R_7$ stands for >C = O and
$R_8$ stands for -S-;
in particular,
poly(etheretherketone) with ($[R_5-R_2-R_5-R_2-R_7]_n$; x=1, $R_4$=H) poly(ethersulphones) ($[R_1-R_5-R_2-R_6-R_2-R_5]_n$; $R_2$: x=1, $R_4$=H), poly(ethersulphones) ($[R_2-R_6-R_2-R_5]_n$; $R_2$: X=1, $R_4$=H) poly(phenylsulphones) ($[(R_2)_2-R_5-R_2-R_6-R_2]_n$; $R_2$: x=2, $R_4$=H) polyetherethersulphones ($[R_5-R_2-R_5-R_2-R_6]_n-[R_5-R_2-R_6-R_2]_m$; $R_2$: x=1, $R_4$=H, n/m=0.18),
poly(phenylene sulphides) ($[R_2-R_8]_n$; $R_2$:x=1, $R_4$=H) and/or
poly (phenylene oxides) ($[R_2-R_5]_n$; $R_4=CH_3$),
are reacted with the nitrogen-containing polymers.

4. Procedure according to claim 1, **characterised in that** polymeric sulphonic acids are dissolved in dipolar-aprotic solvents, thereafter the equimolar quantity of a low-molecular primary, secondary or tertiary amine corresponding to the content of the polymer in $SO_3H$ groups is optionally added and a further polymer is then dissolved in the polymer solution, said further polymer containing primary, secondary or tertiary basic nitrogen groups.

5. Procedure according to any one of claims 1 to 4, **characterised in that** the solvents are selected from N-methyl pyrrolidone, N,N-dimethyl acetamide, N,N-dimethyl formamide, sulpholane or dimethyl sulphoxide.

6. Procedure according to claims 1 to 5, **characterised in that** the polymers are selected from poly(etheretherketones) and poly(ethersulphones) as carriers of sulphonic acid groups or sulphonic acid salt groups.

7. Procedure according to any one of claims 1 to 6, **characterised in that** the polymers are selected from poly (etheretherketones) and poly(ethersulphones) as carriers of the primary, secondary or tertiary basic nitrogen groups.

8. Blend polymers and blend polymer membranes, obtainable according to a process according to claims 1 to 6, **characterised in that** solutions of polymeric sulphonic acids or sulphonic acid salts with an aryl main chain are reacted with poly(4-vinyl pyridine).

9. Use of acid-base polymer blends according to claim 8 in the form of thin films (membranes) as a protein-conducting electrolyte in membrane fuel cells (H2-polymer electrolyte fuel cells or direct methanol fuel cells), in polymer electrolyte membrane (PEM) electrolysis, in aqueous or non-aqueous electrodialysis or in diffusion dialysis.

10. The use of acid-base polymer blends according to claim 8 in the form of thin films (membranes) or in the form of hollow fibres in pervaporation, perstraction, gas separation, dialysis, ultrafiltration, nanofiltration or reverse osmosis.

## Revendications

1. Procédé pour la fabrication de membranes échangeuses d'ions, **caractérisé en ce qu'**on fait réagir des solutions d'acides sulfoniques ou de sels d'acides sulfoniques polymères possédant une chaîne principale aryle avec des polymères contenant un atome d'azote primaire, secondaire ou tertiaire, le sel d'acide sulfonique répondant à la formule générale

$$\text{Polymère - }SO_3X$$

dans laquelle X représente des cations métalliques monovalents, $NH_4^+$, $NHR_3^+$, $RNH_3^+$, $NH_2R_2^+$, $NR_4^+$, pyrimidine-$H^+$, et R représente un radical alkyle et/ou aryle, dans des solvants dipolaires - aprotiques et on soumet à un traitement ultérieur les mélanges base - sel d'acide sulfonique polymère obtenus après entreposage à des températures de 20 °C à 100 °C dans un acide minéral chaud dilué.

2. Procédé selon revendication 1, **caractérisé en ce qu'**on fait réagir des polymères qui sont choisis parmi le groupe comprenant des polyétheréthercétones, des polyéthersulfones, des polyphénylsulfones, des polyphénylène-sulfures et/ou des oxydes de polyphénylène avec des polymères contenant un atome d'azote primaire, secondaire ou tertiaire.

3. Procédé selon la revendication 1, **caractérisé en ce qu'**on fait réagir des sels d'acides sulfoniques polymères choisis parmi des polymères qui présentent, à titre d'unité de structure, des structures à noyau aromatique répondant aux formules $R_1$ ou $R_2$,

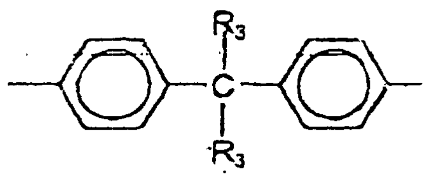

(R₁)

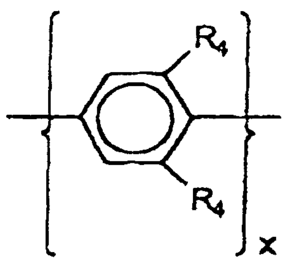

(R₂).

dans lesquelles

- $R_3$ représente un atome d'hydrogène, un groupe trifluorométhyle ou un groupe $C_nH_{2n+1}$ où n = de 1 à 10, en particulier un groupe méthyle ;
- $R_4$ représente un atome d'hydrogène, un groupe trifluorométhyle ou un groupe $C_nH_{2n+1}$ où n = de 1 à 10, en particulier un groupe méthyle ou un groupe phényle ;
- x représente 1, 2 ou 3,

qui sont reliés via des groupes pontaux $R_5$, $R_6$, $R_7$ ou $R_8$ dans lesquels

$R_5$ représente un atome d'oxygène ;
$R_6$ représente un groupe $SO_2$,
$R_7$ représente un groupe >C=O et
$R_8$ représente un atome de soufre,

en particulier
une polyétheréthercétone
avec ($[R_5\text{-}R_2\text{-}R_5\text{-}R_2\text{-}R_7]_n$ ; x = 1, $R_4$ = H),
une polyéthersulfone
($[R_1\text{-}R_5\text{-}R_2\text{-}R_6\text{-}R_2\text{-}R_5]_n$ ; $R_2$ ; x = 1, $R_4$ = H),
une polyéthersulfone
($[R_2\text{-}R_6\text{-}R_2\text{-}R_5]_n$ ; $R_2$ ; x = 1, $R_4$ = H),
une polyphénylsulfone
($[(R_2)_2\text{-}R_5\text{-}R_2\text{-}R_6\text{-}R_2]_n$ ; $R_2$ ; x = 2, $R_4$ = H),
une polyétheréthersulfone
($[R_5\text{-}R_2\text{-}R_5\text{-}R_2\text{-}R_6]_n\text{-}[R_5\text{-}R_2\text{-}R_6\text{-}R_2]_m$ ; $R_2$ ; x = 1, $R_4$ = H, n/m = 0,18),
un polyphénylènesulfure
($[R_2\text{-}R_8]_n$ ; $R_2$ ; x = 1, $R_4$ = H), et/ou
un oxyde de polyphénylène
($[R_2\text{-}R_5]_n$ ; $R_4$ = $CH_3$)
avec les polymères azotés.

**4.** Procédé selon la revendication 1, **caractérisé en ce qu'**on dissout des acides sulfoniques polymères dans des solvants dipolaires - aprotiques, on ajoute ensuite le cas échéant la quantité équimolaire d'une amine primaire, secondaire ou tertiaire à bas poids moléculaire correspondant à la teneur du polymère en groupes $SO_3H$ et on dissout ensuite dans la solution polymère encore un polymère qui contient des groupe azotés basiques primaires, secondaires ou tertiaires.

**5.** Procédé selon l'une quelconque des revendications 1 à 4, **caractérisé en ce qu'**on choisit le solvant parmi le groupe comprenant la N-méthylpyrrolidone, le N,N-diméthyl-acétamide, le N,N-diméthylformamide, le sulfolane ou le diméthylsulfoxyde.

**6.** Procédé selon les revendications 1 à 5, **caractérisé en ce qu'**on choisit les polymères parmi le groupe comprenant des polyétheréthercétones et des polyéthersulfones à titre de support des groupes d'acides sulfoniques ou de sels d'acides sulfoniques.

**7.** Procédé selon l'une quelconque des revendications 1 à 6, **caractérisé en ce qu'**on choisit les polymères parmi le groupe comprenant des polyétheréthercétones et des polyéthersulfones à titre de support des groupes azotés basiques primaires, secondaires ou tertiaires.

**8.** Polymères sous forme de mélanges et membranes constituées par des polymères sous forme de mélanges, que l'on obtient conformément à un procédé selon l'une quelconque des revendications 1 à 6, **caractérisés en ce qu'**on fait réagir des solutions d'acides sulfoniques ou de sels d'acides sulfoniques polymères comprenant une chaîne principale aryle avec de la poly(4-vinylpyridine).

**9.** Utilisation de mélanges polymères d'acides - bases selon la revendication 8, sous la forme de feuilles minces (membranes) à titre d'électrolytes conducteurs de protons dans des piles à combustibles du type à membranes (piles à combustibles du type à électrolyte polymère pour la fabrication d'hydrogène ou encore piles à combustible pour la préparation directe de méthanol), dans l'électrolyse faisant appel à une membrane électrolytique polymère (PEM), dans l'électrodialyse aqueuse ou non aqueuse ou encore dans la dialyse par diffusion libre.

**10.** Utilisation de mélanges polymères d'acides - bases selon la revendication 8, sous la forme de feuilles minces (membranes) ou sous la forme de fibres creuses dans la pervaporation, la perstraction, dans la séparation des gaz, dans la dialyse, dans l'ultrafiltration, dans la nanofiltration ou encore dans l'osmose inverse.

Fig. 1

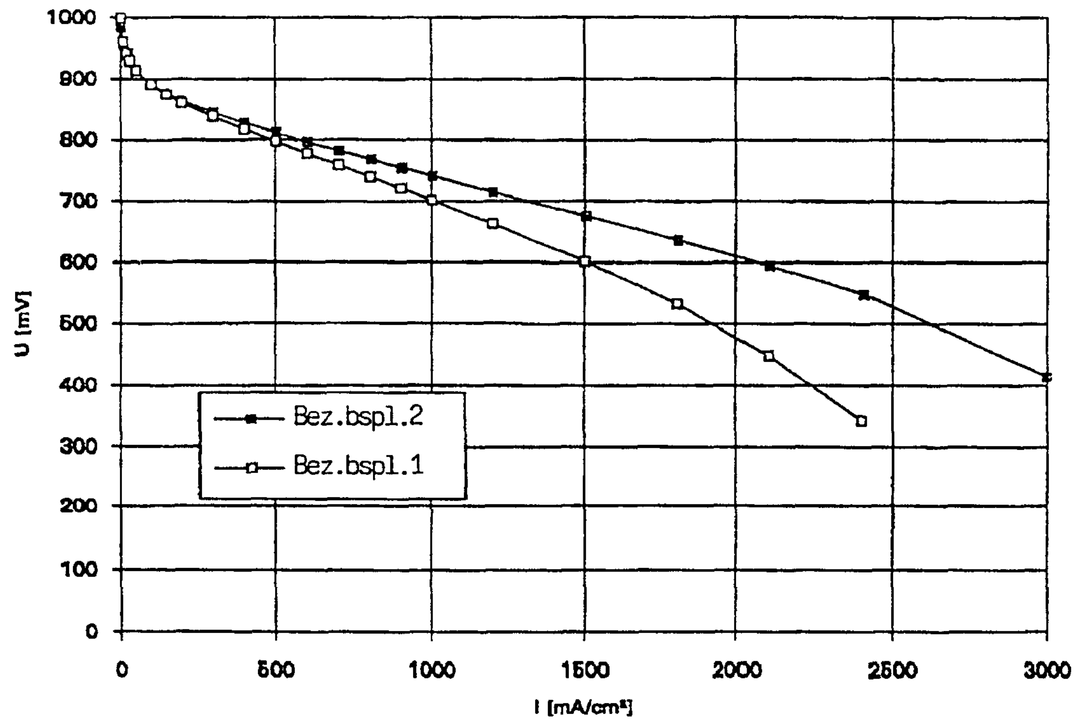
1000
900
800
700
600
500
400
300
200
100
0
U [mV]
0
500
1000
1500
2000
2500
3000
I [mA/cm²]
Bez.bspl.2
Bez.bspl.1

Fig. 2

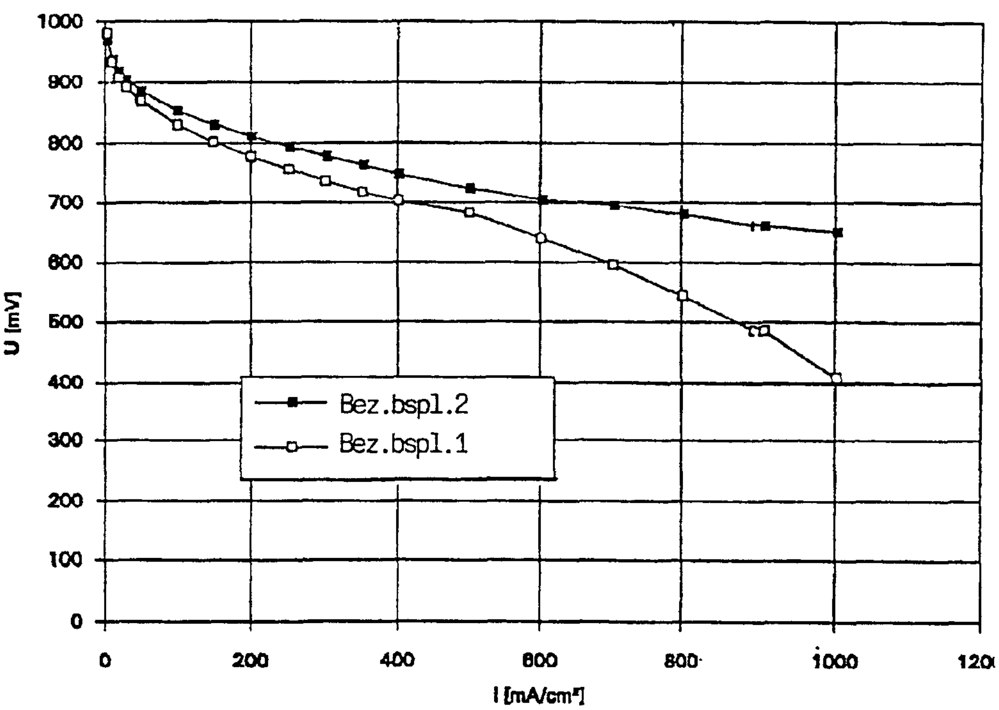
1000
900
800
700
600
500
400
300
200
100
0
U [mV]
0
200
400
600
800
1000
120
I [mA/cm²]
Bez.bspl.2
Bez.bspl.1

Fig. 3

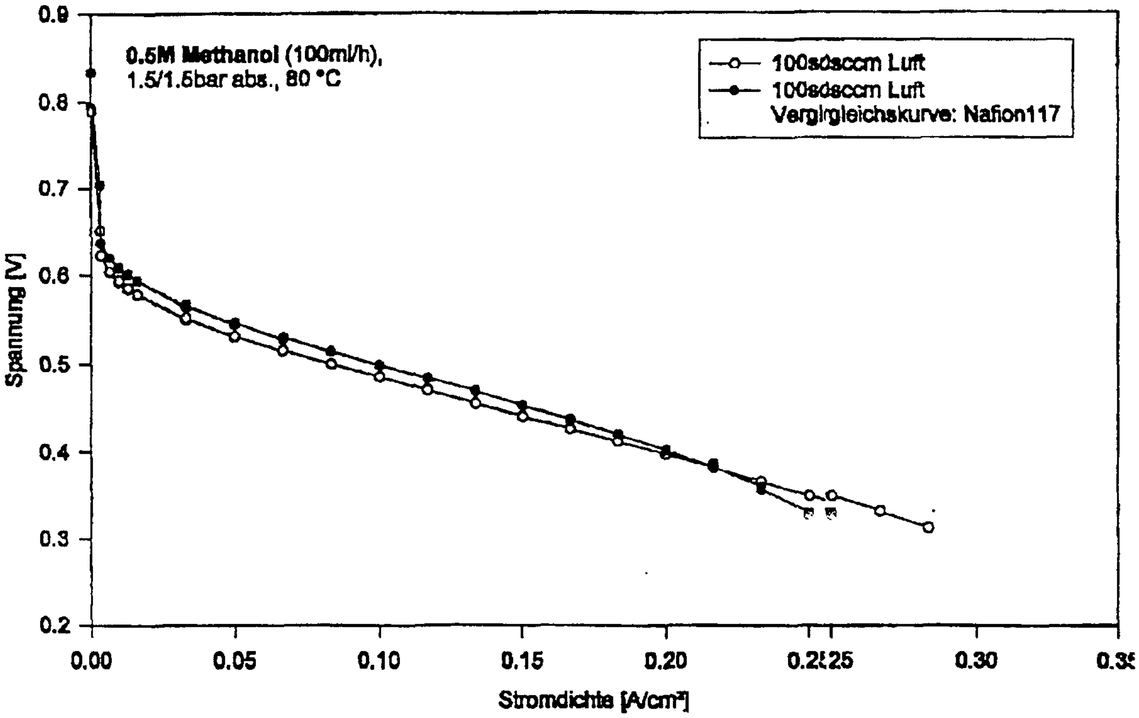
0.5M Methanol (100ml/h),
1.5/1.5bar abs., 80 °C
100sdsccm Luft
100sdsccm Luft
Verglrgleichskurve: Nafion117
Spannung [V]
Stromdichte [A/cm²]
0.9
0.8
0.7
0.6
0.5
0.4
0.3
0.2
0.00
0.05
0.10
0.15
0.20
0.25
0.30
0.35